# EUROPÄISCHE PATENTSCHRIFT

(11) **EP 0 798 876 B1**
(45) Veröffentlichungstag und Bekanntmachung des Hinweises auf die Patenterteilung: **31.05.2006**
(21) Anmeldenummer: 97103944.1
(22) Anmeldetag: 10.03.1997
(51) Int. Cl.: H04B 3/20, H04B 3/23

(54) **Schaltungsanordnung zur Leitungsanpassung und Echounterdrückung**
Circuit for line matching and echo suppressing
Circuit pour adaptation de lignes et suppression d'échos

(30) Priorität: 26.03.1996 DE 19611941
(43) Veröffentlichungstag der Anmeldung: 01.10.1997
(73) Patentinhaber: Infineon Technologies AG, 81669 München (DE)
(72) Erfinder: Dielacher, Franz, 9500 Villach (AT); Caldera, Peter, 9500 Villach (AT); Hauptmann, Jörg, 9500 Villach (AT); Kahl, Alexander, 9500 Villach (AT)

(56) Entgegenhaltungen:
- US-A- 4 796 296
- VOGEL D ET AL: "A SIGNAL-PROCESSING CODEC FILTER FOR PCM APPLICATIONS" SIEMENS FORSCHUNGS- UND ENTWICKLUNGSBERICHTE, SPRINGER VERLAG. BERLIN, DE, Bd. 15, Nr. 5, 1986, Seiten 253-258, XP000843628 ISSN: 0370-9736

## Beschreibung

Die Erfindung betrifft eine Schaltungsanordnung zur Leitungsanpassung und Echounterdrückung mit einem Balancefilter, das durch Sendesignale angesteuert wird und dessen Ausgangssignale mit einem Empfangssignal mittels einer Subtrahiereinrichtung verknüpft werden, mit einem Impedanzanpaßfilter, das durch die Empfangssignale angesteuert wird und dessen Ausgangssignale mit dem Sendesignal mittels einer Addiereinrichtung verknüpft werden, mit einem Analog-Digital-Umsetzer zur Umsetzung von analogen Empfangssignalen in digitale Empfangssignale und mit einem Digital-Analog-Umsetzer zur Umsetzung von digitalen Sendesignalen in analoge Sendesignale.

Eine derartige Schaltungsanordnung ist beispielsweise aus D. Vogel, E. Schmid, J. Reisinger, L. Lerach, "A Signal-Processing Codec Filter for PCM Applications", Siemens Forschungs- und Entwicklungsberichte 15 (1986), Nr. 5, Berlin, Seiten 253 bis 258 bekannt. Dabei sind ein im Empfangsweg befindlicher Analog-Digital-Umsetzer sowie ein im Sendeweg befindlicher Digital-Analog-Umsetzer vorgesehen. Auf digitaler Seite werden ein Impedanzanpaßfilter (Z-Filter) und ein Balancefilter (B-Filter) verwendet, wobei das Impedanzanpaßfilter digitale Empfangssignale am Ausgang des Analog-Digital-Umsetzers abgreift, diese filtert. Mittels der Addiereinrichtung wird das Ausgangssignal des Impedanzpaßfilters mit dem Sendesignal verknüpft dem Digital-Analog-Umsetzer zuführt. Das Balancefilter ist ebenfalls digital ausgeführt und wird dementsprechend von dem digitalen Sendesignal angesteuert. Über die Subtrahiereinrichtung (oder eine weitere Addiereinrichtung) wird das Ausgangssignal des Balancefilters mit dem digitalen Empfangssignal verknüpft.

Auch in der US Patentschrift Nr. 4,796,296 ist eine Kodier- und Dekodiereinrichtung offenbart, die zwei Balancefilter enthält, wobei ein erstes digitales Balancefilter das digitale Sendesignal verarbeitet und einem zweiten analogen Balancefilter ein analoges Sendesignal zugeführt ist. Das Problem einer steuerbaren Impedanzanpassung ist in diesem Dokument nicht adressiert.

Eingangs genannte Schaltungsanordnungen werden insbesondere bei elektronischen Zweidraht-Vierdraht-Umsetzern verwendet, bei denen jedoch, je nach Leitungslänge, Echoterme entstehen können, die unter Umständen um ein Vielfaches größer sind, als das empfangene Nutzsignal. Diese Echoterme sollen durch das Balancefilter herausgefiltert werden. Zu diesem Zweck wird durch das Balancefilter der Echopfad nachgebildet, wobei durch die nachfolgende Subtraktion Ausgangssignale vom Empfangssignal die Echoterme entfernt werden. Dabei kann jedoch nur die Auslöschung von linearen Termen erreicht werden. Produziert der Digital-Analog-Umsetzer und/oder der Analog-Digital-Umsetzer aufgrund ihrer Nichtlinearitäten Oberwellen, so gelangen diese ungefiltert in den Empfangspfad und reduzieren somit den erreichbaren Signal-Rausch-Abstand.

Aufgabe der Erfindung ist es, eine Schaltungsanordnung der eingangs genannten Art anzugeben, bei der diese Nachteile nicht auftreten.

Die Aufgabe wird gelöst durch eine Schaltungsanordnung gemäß Patentanspruch 1. Ausgestaltungen und Weiterbildungen des Erfindungsgedankens sind Gegenstand von Unteransprüchen.

Vorteil dabei ist, daß das Impedanzanpaßfilter digital ausgeführt ist, so daß dieses auf einfache Weise programmiert werden kann und auch komplexe Filterterme ohne großen Aufwand berücksichtigt werden können. Das Balancefilter dagegen wird in analoger Technik mit vertretbarem Aufwand realisiert, wobei nicht nur lineare Echoterme, sondern auch harmonische Anteile insbesondere des Digital-Analog-Umsetzers herausgefiltert werden können. Die Nichtlinearitäten des Analog-Digital-Umsetzers spielen darüber hinaus ebenso keine Rolle mehr, da die Pegel des Echosignals bereits vor dem Analog-Digital-Umsetzer durch das Balancefilter stark gedämpft werden. Dies alles wird dadurch erreicht, daß das Balancefilter auf analoger Seite und das Impedanzanpaßfilter auf digitaler Seite angeordnet wird.

Weiter ist vorgesehen, daß an das Impedanzanpaßfilter unter Zwischenschaltung eines weiteren Analog-Digital-Umsetzers die analogen Empfangssignale angelegt sind. Bei dieser Weiterbildung der Erfindung werden Einflüsse des Balancefilters auf das Impedanzanpaßfilter aufgrund des weiteren Analog-Digital-Umsetzers und des durch diesen begründeten zusätzlichen Signalpfads eliminiert.

Schließlich werden durch ein digitale Signale verarbeitendes, weiteres Balancefilter die Anforderungen an das analoge Signale verarbeitende Balancefilter herabgesetzt, so daß der Aufwand für das analoge Balancefilter ohne größere Einbußen an Übertragungsqualität stark herabgesetzt wird. Damit kann beispielsweise ein gewünschtes Balancefilter derart aufgeteilt werden, daß das analoge Teilfilter mit relativ einfachen Mitteln eine möglichst hohe Grundechodämpfung erreicht, während die restliche Echodämpfung, die beispielsweise einen hohen zusätzlichen Aufwand erfordern würde, auf einfache Weise mit digitalen Mitteln realisiert wird. Folglich wird durch das weitere Balancefilter und einer entsprechenden Auslegung der beiden Balancefilter ein optimales Aufwand-Nutzen-Verhältnis erzielt werden.

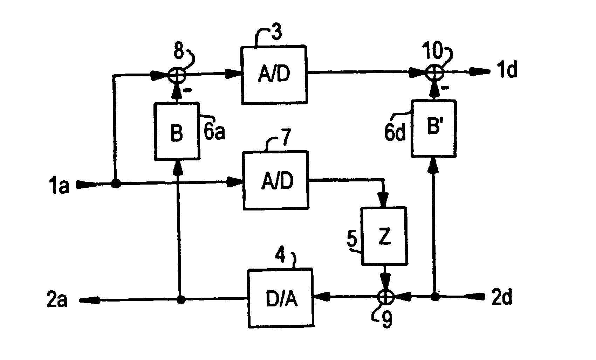

Die Erfindung wird nachfolgend anhand des in der einzigen Figur der Zeichnung dargestellten Ausführungsbeispiels näher erläutert.

Bei der als Ausführungsbeispiel gezeigten erfindungsgemäßen Schaltungsanordnung ist ein Analog-Digital-Umsetzer 3 zur Umsetzung eines analogen Empfangssignals 1a in ein digitales Empfangssignal 1d sowie ein Digital-Analog-Umsetzer 4 zur Umwandlung eines digitalen Sendesignals 2d in ein analoges Sendesignal 2a vorgesehen. Ein analoges Balancefilter 6a mit einem zur Echounterdrückung geeigneten Übertragungsverhalten ist eingangsseitig mit dem Ausgang des Digital-Analog-Umsetzers 4 verbunden und wird demnach durch das analoge Sendesignal 2a angesteuert. Der Ausgang des analogen Balancefilters 6a ist mit dem invertierenden Eingang eines analogen Subtrahierers 8 verbunden, über dessen nichtinvertierenden Eingang und dessen Ausgang das analoge Empfangssignal 1a auf den Analog-Digital-Umsetzer 3 geführt ist. Störende Echosignale werden folglich durch das analoge Balancefilter 6a herausgefiltert und mittels des analogen Subtrahierers 8 von dem analogen Empfangssignal 1a subtrahiert.

Zur Impedanzanpassung an eine analogseitig installierte, in der Zeichnung nicht näher dargestellte Leitung ist ein Impedanzanpaßfilter 5 vorgesehen, das gemäß einer Weiterbildung der Erfindung unter Zwischenschaltung eines weiteren Analog-Digital-Umsetzers 7 durch das analoge Empfangssignal 1a angesteuert wird. Der Ausgang des Impedanzanpaßfilters 5 ist mit einem Eingang eines digitalen Addierers 9 verbunden, über dessen anderen Eingang und dessen Ausgang das digitale Sendesignal 2d zum Eingang des Digital-Analog-Umsetzers 4 geführt wird.

Schließlich ist ein digitales, weiteres Balancefilters 6d zwischen digitalen Sendepfad und digitalen Empfangspfad geschaltet. Dabei wird das digitale Sendesignal 2d an den Eingang des digitalen Balancefilters 6d angelegt, dessen Ausgang mit dem invertierenden Eingang eines digitalen Subtrahierers 10 verbunden ist. Dessen nichtinvertierender Eingang ist wiederum an den Ausgang des Analog-Digital-Umsetzers 3 angeschlossen und dessen Ausgang führt das digitale Empfangssignal 1d. Das digitale Balancefilter 6d ergänzt beim vorliegenden Ausführungsbeispiel das analoge Balancefilter 6a in der Weise, daß das analoge Balancefilter 6a bereits eine gute Vorkompensation insbesondere hinsichtlich der Auslöschung nichtlinearer Terme bietet und das digitale Balancefilter 6d verbleibende Echos bei geringem schaltungstechnischen Aufwand unterdrückt, wobei durch die Vorkompensation vorteilhafterweise die Anforderungen an den Analog-Digital-Umsetzer 3 und den Digital-Analog-Umsetzer 4 verringert werden.

Die Auslegung der Balancefilter 6a und 6d sowie des Impedanzanpaßfilters 5 hängt ebenso wie die Wahl entsprechender Analog-Digital-Wandler 3 und 7 sowie des Digital-Analog-Umsetzers 4 vom jeweiligen Einzelfall ab und kann daher in einem weiten Bereich variieren. Die Umsetzer 3, 7, 4 können dabei nach beliebigen Umsetzerprinzipien arbeiten und beliebige zusätzliche Arbeitsmittel wie beispielsweise vor- und nachgeschaltete Filter, Sample- und Hold-Einrichtungen etc. umfassen. Anstelle des Addierers kann auch ein Subtrahierer und anstelle der Subtrahierer können auch Addierer bei entsprechender Signalphasenlage eingesetzt werden. Der im Ausführungsbeispiel gezeigten Schaltungsanordnung wird bevorzugt ein in der Zeichnung nicht näher dargestellter Zweidraht-Vierdraht-Umsetzer vorgeschaltet, der seinerseits beispielsweise an eine Zweidraht-Telefonleitung angeschlossen ist.

## Patentansprüche

1. Schaltungsanordnung zur Leitungsanpassung und EchoUnterdrückung mit:
(a) einem ersten Analog-Digital-Umsetzer (3) zur Umsetzung eines analogen Empfangssignals (1a) in ein digitales Empfangssignal (1d);
(b) einem Digital-Analog-Umsetzer (4) zur Umsetzung eines digitalen Sendesignals (2d) in ein analoges Sendesignal (2a);
(c) einem analogen Balancefilter (6a) zum Filtern des analogen Sendesignal (2a);
(d) einer Subtrahiereinrichtung (8) zum Verknüpfen des gefilterten analogen Sendesignals mit dem analogen Empfangssignal (1a);
(e) ein digitales Impedanzanpaßfilter (5) zum Filtern des von einem weiteren Analog-Digital-Umsetzer (7) gewandelten analogen Empfangssignal (1a);
(f) einer Addiereinrichtung (9) zum Verknüpfen des Ausgangssignals des digitalen Impedanzanpaßfilters (5) mit dem digitalen Sendesignal (2d).

2. Schaltungsanordnung nach Anspruch 1,
**gekennzeichnet durch**,
ein digitales signalverarbeitendes, weiteres Balancefilter (6d), an dessen Eingang das digitale Sendesignal (2d) angelegt ist und dessen Ausgangssignal mit dem digitalen Empfangssignal (1d) mittels einer weiteren Subtrahiereinrichtung (10) verknüpft wird.

## Claims

1. Circuit arrangement for line matching and echo suppression having:
(a) a first analogue/digital converter (3) for conversion of an analogue received signal (1a) to a digital received signal (1d);
(b) a digital/analogue converter (4) for conversion of a digital transmission signal (2d) to an analogue transmission signal (2a);
(c) an analogue balance filter (6a) for filtering the analogue transmission signal (2a);
(d) a subtraction device (8) for linking the filtered analogue transmission signal with the analogue received signal (1a);
(e) a digital impedance matching filter (5) for filtering the analogue received signal (1a) which has been converted by a further analogue/digital converter (7);
(f) an addition device (9) for linking the output signal from the digital impedance matching filter (5) to the digital transmission signal (2d).

2. Circuit arrangement according to Claim 1,
**characterized by**
a digital signal-processing, further balance filter (6d), to whose input the digital transmission signal (2d) is applied and whose output signal is linked with the digital received signal (1d) by means of a further subtraction device (10).

## Revendications

1. Circuit pour l'adaptation de ligne et la suppression d'écho comprenant :
(a) un premier convertisseur analogique-numérique (3) pour la conversion d'un signal de réception analogique (1a) en un signal de réception numérique (1d) ;
(b) un convertisseur numérique-analogique (4) pour la conversion d'un signal d'émission numérique (2d) en un signal d'émission analogique (2a) ;
(c) un filtre de compensation analogique (6a) pour filtrer le signal d'émission analogique (2a) ;
(d) un dispositif soustracteur (8) pour combiner le signal d'émission analogique filtré avec le signal de réception analogique (1a) ;
(e) un filtre d'adaptation d'impédance numérique (5) pour filtrer le signal de réception analogique (1a) converti par un autre convertisseur analogique-numérique (7) ;
(f) un dispositif additionneur (9) pour combiner le signal de sortie du filtre d'adaptation d'impédance numérique (5) avec le signal d'émission numérique (2d).

2. Circuit selon la revendication 1,
**caractérisé par**
un autre filtre de compensation (6d) numérique traitant le signal, le signal d'émission numérique (2d) étant appliqué à son entrée et son signal de sortie étant combiné avec le signal de réception numérique (1d) à l'aide d'un autre dispositif soustracteur (10).
